(19) Europäisches Patentamt
European Patent Office
Office européen des brevets

(11) Veröffentlichungsnummer : **0 073 951**
**B1**

(12) # EUROPÄISCHE PATENTSCHRIFT

(45) Veröffentlichungstag der Patentschrift : **09.10.85**

(51) Int. Cl.⁴ : **C 09 B 55/00**// D06P1/10

(21) Anmeldenummer : **82107343.4**

(22) Anmeldetag : **13.08.82**

(54) **Asymmetrische 1 : 2-Chromkomplexfarbstoffe und Verfahren zu ihrer Herstellung und zum Färben.**

(30) Priorität : **25.08.81 DE 3133505**

(43) Veröffentlichungstag der Anmeldung : **16.03.83 Patentblatt 83/11**

(45) Bekanntmachung des Hinweises auf die Patenterteilung : **09.10.85 Patentblatt 85/41**

(84) Benannte Vertragsstaaten : **CH DE FR GB LI**

(56) Entgegenhaltungen :
**DE-C- 913 177**
**DE-C- 940 483**
**FR-E- 69 986**
**US-A- 4 052 374**

(73) Patentinhaber : **BAYER AG**
**Konzernverwaltung RP Patentabteilung**
**D-5090 Leverkusen 1 Bayerwerk (DE)**

(72) Erfinder : **Mennicke, Winfried, Dr.**
**Steglitzer Strasse 8**
**D-5090 Leverkusen 1 (DE)**

**EP 0 073 951 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Vorliegende Erfindung betrifft 1 : 2-Chromkomplexfarbstoffe, die in Form der freien Säure der Formel

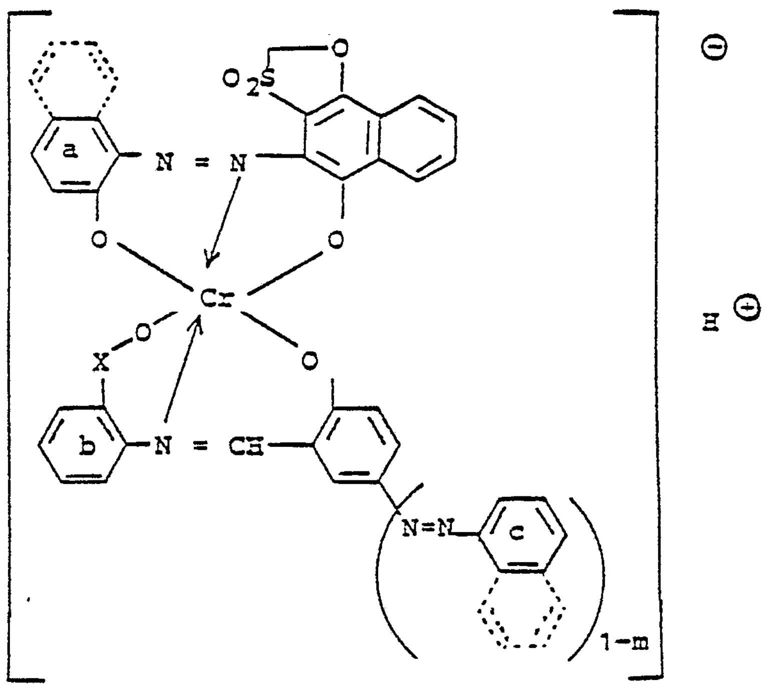

(I)

entsprechen, worin

X für CO oder eine direkte Bindung und

m für 0 oder 1 stehen und

die Ringe a, b und c bzw. die gegebenenfalls ankondensierten Benzolkerne weitere in der Chemie der Metallkomplexfarbstoffe übliche Substituenten tragen können.

Geeignete Substituenten in den ringen a, b und c sind beispielsweise $SO_3H$, Sulfamoyl, Carbamoyl, Alkyl, Trifluormethyl, Alkoxy, Alkylsulfonyl, $NH_2$, $NO_2$, Cl oder Br.

Bevorzugte Alkyl- und Alkoxygruppen sind solche mit 1-3 C-Atomen, die gegebenenfalls weiter substituiert sein können, beispielsweise durch CN, Cl, OH, $C_1$-$C_4$-Alkoxy, Phenyl. Besonders bevorzugt sind Methyl bzw. Methoxy.

Bevorzugte Acylaminogruppen sind insbesondere $C_1$-$C_4$-Alkylcarbonylamino, $C_1$-$C_4$-Alkoxycarbonylamino, $C_1$-$C_4$-Alkylsulfonylamino.

Die Sulfamoyl- und Carbamoylgruppen können mono- oder disubstituiert sein beispielsweise durch gegebenenfalls substituiertes $C_1$-$C_4$-Alkyl oder durch Aryl, insbesondere gegebenenfalls substituiertes Phenyl.

Bevorzugte Arrylreste sind insbesondere gegebenenfalls substituierte Phenylreste mit Substituenten wie Halogen, insbesondere Cl und Br, $NO_2$, $C_1$-$C_4$-Alkoxy, $C_1$-$C_4$-Alkyl.

Bevorzugte Farbstoffe sind solche der Formeln

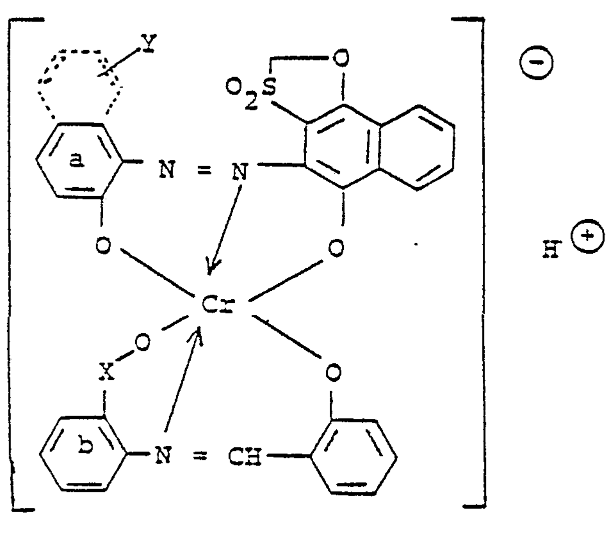

(II)

und

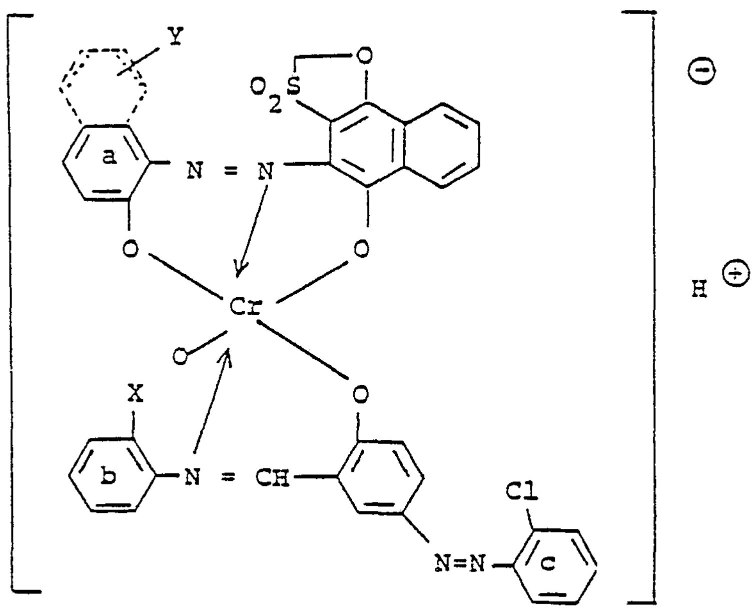

(III)

worin

Ring a durch $SO_3H$, Sulfamoyl, Cl oder $NO_2$,
Ring b durch $SO_3H$, Sulfamoyl, Cl, $NO_2$ oder $CH_3$ und
Ring c durch $SO_3H$, Sulfamoyl, Cl, $CH_3$ oder $OCH_3$ substituiert sein können und
X die obengenannte Bedeutung hat, und
Y für H oder $NO_2$ steht.

Bevorzugte Farbstoffe (II) und (III) sind solche mit einer einzigen Sulfogruppe im Molekül.

Die erfindungsgemäßen Farbstoffe werden in an sich bekannter Weise (vgl. z. B. DE-A-2 735 287, US-A-2 985 646 und GB-A-1 197 265) erhalten, indem man einen Farbstoff der Formel

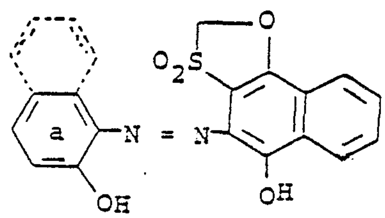

(IV)

oder

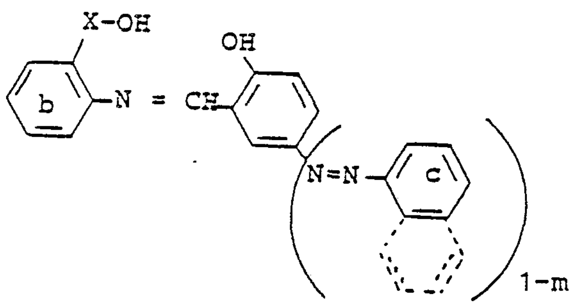

(V)

mit einem chromabgebenden Mittel in den 1 : 1-Chromkomplex überführt und diesen mit dem entsprechenden nichtmetallisierten Farbstoff der Formel (V) bzw. (IV) umsetzt.

Wegen ihrer leichten Zugänglichkeit können anstelle der Azomethine der Formel (V) auch Gemische aus Aminen der Formel

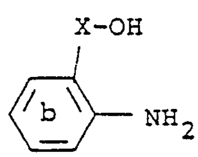

(VI)

mit den Aldehyden der Formel

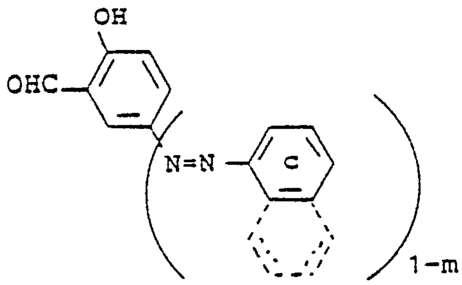

(VII)

eingesetzt werden.

Die Monoazofarbstoffe der Formel (IV) werden in bekannter Weise durch Kuppeln von diazotierten Aminen der Formel

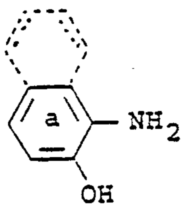

(VIII)

auf 4'-Hydroxynaphtho-(2',1' : 4,5)-oxathiazol-S-dioxid (IX) erhalten, diejenigen der Formel (VII) durch Kuppeln von diazotierten Aminen der Formel

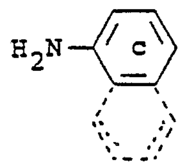

(X)

auf Salicylaldehyd.

Die Verbindung (IX) und die daraus hergestellten Monoazofarbstoffe sind bekannt (vgl. DE-A-913 177, 940 483, 1 011 574).

Geeignete Diazoverbindungen der Formel (VIII) sind beispielsweise :

2-Amino-1-hydroxybenzol,
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor- und 4-Methyl- und 4-Acetylamino-6-nitro-2-amino-1-hydroxybenzol,
6-Methyl-, 6-Acetylamino- und 6-Chlor-4-nitro-2-amino-1-hydroxybenzol,
4-Chlor-6-acetamino-2-amino-1-hydroxybenzol,
4-Chlor-5-nitro-2-amino-1-hydroxybenzol,
4- oder 5-Methyl-2-amino-1-hydroxybenzol,
2-Methoxy-2-amino-1-hydroxybenzol,
2-Amino-1-hydroxybenzol-4- oder -5-methylsulfon,
2-Amino-1-hydroxybenzol-4- oder -5-phenylsulfon,
2-Amino-1-hydroxybenzol-4-ethyl-, -4-chlormethyl- und -4-butylsulfon,
2-Amino-1-hydroxybenzol-4- oder -5-sulfonamid,
2-Amino-1-hydroxybenzol-4-oder-5-sulfomethylamid,
2-Amino-1-hydroxybenzol-4- oder -5-sulfodimethylamid,
2-Amino-1-hydroxybenzol-4- oder -5-sulfanilid,
4-Nitro-2-amino-1-hydroxybenzol-5- oder -6-sulfonamid,
2-Amino-1-hydroxybenzol-4-sulfanthranilid,
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,

2-Amino-1-hydroxynaphthalin-4-sulfonsäure,
1-Amino-2-hydroxynaphthalin-4-sulfonsäure,
6-Nitro-, 6-Methyl- oder 6-Brom-1-amino-2-hydroxynaphthalin-4-sulfonsäure.

Beispiele für Amine der Formel (VI) sind alle von Benzol abgeleiteten Amine der Formel (VIII), weiterhin
2-Aminobenzoesäure
2-Aminobenzoesäure-4- oder -5-sulfonsäure,
2-Aminobenzoesäure-4- oder -5-sulfonamid,
4-, 5- oder 6-Chlor-2-aminobenzoesäure,
3,5-Dichlor-2-aminobenzoesäure,
4- oder 5-Nitro-2-aminobenzoesäure.

Als Amine (X) kommen beispielsweise in Betracht:
2-, 3- oder 4-Chloranilin,
2,4-, 2,5- oder 3,5-Dichloranilin,
2-, 3- oder 4-Methylanilin,
2,4- oder 2,5-Dimethylanilin,
2-Chlor-5-methylanilin,
2,4-Dichlor-5-methylanilin,
Anilin-2-, -3- oder -4-sulfonsäure,
Anilin-3- oder -4-sulfonamid,
2-Methoxyanilin-5-sulfonamid,
2-Chlor-4-cyanoanilin,
Anilin-2-, -3- oder -4-carbonsäure,
Anilin-3- oder -4-carbonamid,
2-Chloranilin-5-carbonamid, -5-sulfonamid oder -5-methylsulfon,
2-Chloranilin-4-sulfonsäure,
2,5-Dichloranilin-4-sulfonsäure,
2-Methyl- oder 2-Methoxyanilin-5-sulfonsäure,
4-Methoxyanilin-2-sulfonsäure,
2-Methylanilin-4-sulfonsäure,
2-, 3- oder 4-Methoxyanilin,
2-Methoxy-5-methylanilin,
1-Naphthylamin,
1-Naphthylamin-4-, -5-, -6- oder -7-sulfonsäure,
2-Naphthylamin-1-, -5-, -6-, -7- oder -8-sulfonsäure.

Die Überführung der Azofarbstoffe der Formel (IV) oder der Azomethinfarbstoffe der Formel (V) in den Chrom-1 : 1-Komplex erfolgt nach üblichen, an sich bekannten Methoden, indem man z. B. den metallfreien Farbstoff mit einem Salz des 3-wertigen Chroms, wie chromchlorid, Chromfluorid, Chromsulfat oder Chromformiat im wäßrigen Medium bei Siedetemperatur oder gegebenenfalls höherer Temperatur umsetzt. Man kann die Metallisierung auch in Gegenwart von organischen Lösungsmitteln oder in organischen Lösungsmitteln allein vornehmen, beispielsweise in Alkoholen, Etheralkoholen oder Ketonen. Besonders glatt verläuft die Reaktion unter Ausschluß von Wasser, indem man beispielsweise nach dem Verfahren der Deutschen Offenlegungsschrift 2 605 574 das Reaktionswazsser während der Chromierung in Etheralkoholen destillativ entfernt.

Die Umsetzung der Chrom-1 : 1-Komplexe der Farbstoffe der Formel (IV) oder (V) mit den metallfreien Farbstoffen der Formel (V) bzw. (IV) oder die Umsetzung der von den Azofarbstoffen der Formel (IV) abgeleiteten Chrom-1 : 1-Komplexe mit Gemischen aus den Aminen der Formel (VI) und den Aldehyden der Formel (VII) erfolgt zweckmäßig in alkalischem bis schwach saurem Medium bei gewöhnlicher oder erhöhter Temperatur, vorzugsweise im Bereich von 50-100 °C. Auch hier kann die Umsetzung in wäßriger Lösung in Gegenwart eines Lösungsmittels oder in einem Lösungsmittel allein durchgeführt werden, wobei niedere Alkohole, wie Ethanol, Ketone, wie Ethylmethylketon, Glykole, Etheralkohole, wie Ethyl- oder Butylglykol, und Carbonamide wie Formamid oder Dimethylformamid, in Frage kommen. Die Reaktionsteilnehmer werden bevorzugt in stöchiometrischen Mengen eingesetzt; ein Überschuß an metallhaltigem Farbstoff wirkt sich im allgemeinen weniger nachteilig aus als ein Überschuß an metallfreiem Farbstoff.

Die bei der Anlagerung des metallfreien an den metallhaltigen Farbstoff freiwerdende Säure wird durch Zusatz alkalisch wirkender Mittel abgefangen, beispielsweise durch Zusatz von Hydroxiden oder Carbonaten von Alkalimetallen, wie Lithium-, Natrium-, Kaliumhydroxid, oder -carbonat, von Ammoniak oder organischen Aminen, wie Mono-, Di-, Triethylamin, Mono-, Di- oder Triethanolamin, oder von Tetraalkylammoniumhydroxiden, wie Tetramethylammoniumhydroxid. Vorzugsweise setzt man die alkalisch wirkenden Mittel so zu, daß die Reaktion bei einem konstanten pH-Wert abläuft.

Am Ende der Reaktion liegen die erfindungsgemäßen 1 : 2-Chromkomplexfarbstoffe als Salz der

Komplexsäure und der an ihr gebundenen $SO_3H$-Gruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden. Zur Neutralisation können auch Amine Verwendung finden, die mit den 1 : 2-Chromkomplexfarbstoffen in Wasser schwer lösliche Salze bilden, so daß sie nur unter Zusatz von organischen Lösungsmitteln oder in diesen Lösungsmitteln allein gelöst werden können. Derartige Amine sind beispielsweise N-Ethyl-N-hexylamin, Dodecylamin, Oleylamin, Cyclohexylamin, N,N-Dicyclohexylamin, N,N'-Diphenylguanidin oder N,N'-Ditolylguanidin.

Die so hergestellten 1 : 2-Chromkomplexe, die in der sauren Form den Farbstoffen der Formel (I) entsprechen, können durch Aussalzen mit Alkalisalzen, Eindampfen auf der Walze oder Sprühtrocknung isoliert und mit den üblichen Hilfs- und Stellmitteln zu wasserlöslichen Präparationen verarbeitet werden, sei es zu Pulvern, zu Granulaten mit einer Korngröße von mindestens 20µ oder zu kaltwasserlöslichen und kaltdispergierbaren Zubereitungen.

Die Zubereitung zu flüssigen Präparationen unter Verwendung von organischen Lösungsmitteln gegebenenfalls im Gemisch mit Wasser und gegebenenfalls unter Zusatz von Lösungsvermitteln, wie beispielsweise Harnstoff, ist ebenfalls möglich und insofern empfehlenswert, als man die Synthese der 1 : 2-Chromkomplexe oder einen Teil dieser Synthese und die Herstellung der Farbstofflösungen in einem Topf ohne Zwischenisolierungen vollziehen kann. Besonders vorteilhaft ist das Verfahren der Deutschen Offenlegungsschrift 2 443 483, bei dem man u. a. den metallfreien Farbstoff in hydroxylgruppenhaltigen Lösungsmitteln in Gegenwart von alkalisch wirkenden Lithiumsalzen an den metallhaltigen Farbstoff anlagert und dabei gleichzeitig lagerstabile konzentrierte Farbstofflösungen erhält. Flüssige Farbstoffzubereitungen sind auch durch Flüssig-Flüssig-Extraktionen möglich, indem man, wie beispielsweise in der Europäischen Patentveröffentlichung 24 609 beschrieben, in einer Lösung aus Wasser und einem Etheralkohol durch Zusatz von anorganischen Salzen eine Phasentrennung durchführt und die den organischen Farbstoff enthaltende Phase abtrennt.

Die 1 : 2-Chromkomplexe der Formel (I), die aufgrund der enthaltenen Kationen in Wasser schwer und in organischen Lösungsmitteln gut löslich sind, können zum Färben von organischen Flüssigkeiten, Harzen oder Lacken, von Holzbeizen oder Kugelschreibertinten verwendet werden.

Die 1 : 2-Chromkomplexe der Formel (I), die aufgrund der enthaltenen Kationen in Wasser gut löslich sind, eignen sich zum Färben und Bedrucken der verschiedensten Stoffe, vor allem zum Färben von natürlichen oder synthetischen amidgruppenhaltigen Materialien, wie Wolle, Seide, Leder, Polyamid- und Polyurethanfaser. Sie sind vor allem zum Färben aus schwach alkalischem, neutralen oder schwach saurem, z. B. essigsaurem, Bade geeignet. Man erhält gleichmäßige Färbungen in olivfarbenen bis brillanten grünen Nuancen mit guten Licht- und Gebrauchsechtheiten.

Die flüssigen Zubereitungen der erfindungsgemäßen Farbstoffe mit einer Sulfogruppe eignen sich auch zum Sprühfärben von Leder und zum Färben von Leder auf Durchlauf-Mehrzweckmaschinen beispielsweise vom Typ MULTIMA, ein Verfahren, bei dem sich besonders die Farbstoffe mit einer Arylazogruppe am Salicylaldehyd (Formel I, m = 0) durch gute Bindung zum Substrat und gute Wassertropfenechtheit auszeichnen.

Beispiel 1

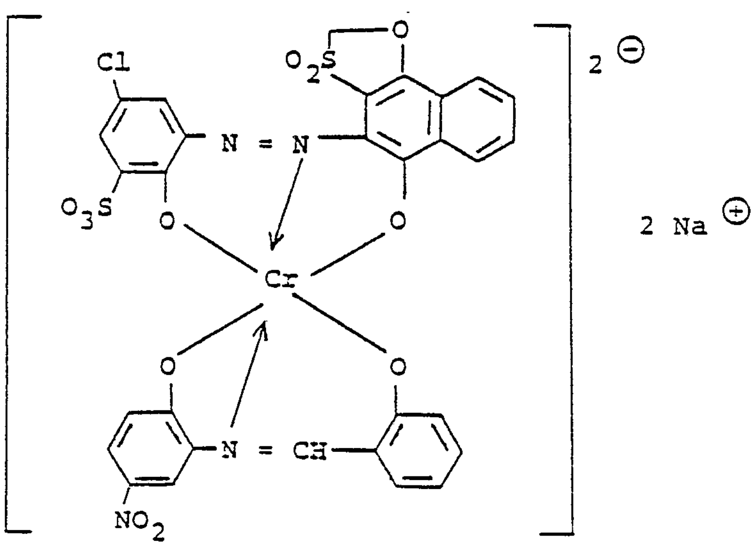

47,1 g des Monoazofarbstoffes aus diazotierter 4-Chlor-2-amino-1-hydroxybenzol-6-sulfonsäure und 4'-Hydroxynaphtho-(2',1' : 4,5)-oxathiazol-S-dioxid werden in 500 ml Ethylenglykolmonoethylether mit 26,65 g $CrCl_3 \cdot 6H_2O$ 5 Stunden lang unter Rückfluß erhitzt. Man läßt die Lösung des entstandenen Chrom-1 : 1-Komplexes auf 80 °C abkühlen und setzt 15,4 g 4-Nitro-2-amino-1-hydroxybenzol, 12,2 g

Salicylaldehyd und tropfenweise ca. 60 ml 40 %ige Natronlauge zu. Dabei hält man die Temperatur weiterhin auf 80 °C und läßt die Natronlauge so zutropfen, daß sich der pH im Bereich von 7-8 bewegt. Eine halbe Stunde später, wenn keine Natronlauge mehr verbraucht wird, sind die Ausgangsverbindungen zum Chrommischkomplex zusammengetreten. Aus der tiefgrünen Lösung läßt sich mit gesättigter Kochsalzlösung ein Niederschlag ausfällen, der in getrocknetem Zustand ein dunkelgrünes Pulver darstellt. Es färbt Wolle und Polyamid in grünen Tönen von guten Echtheiten.

Beispiel 2

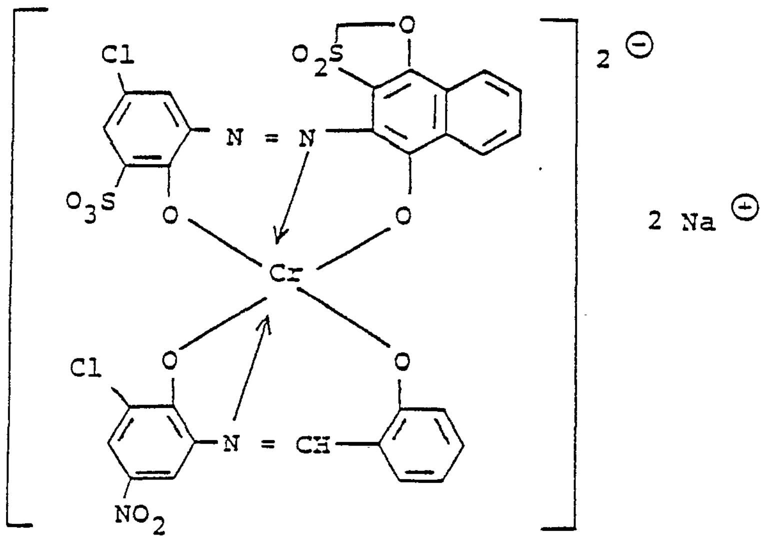

18,95 g 4-Nitro-6-chlor-2-amino-1-hydroxybenzol werden mit 12 ml 40 %ige Natronlauge in 500 ml Wasser durch Erhitzen auf 70 °C gelöst. Man Trägt den Chrom-1 : 1-Komplex, hergestellt aus 47,1 g des Monoazofarbstoffes aus diazotierter 4-Chlor-2-amino-1-hydroxybenzol-6-sulfonsäure und 4'-Hydroxynaphtho-(2',1' : 4,5)-oxathiazol-S-dioxid, ein und läßt bei 70-80 °C ca. 50 ml 40 %ige Natronlauge und 12,2 g Salicylaldehyd so zutropfen, daß der pH im Bereich von 7-8 gehalten wird. Nach etwa 30 Minuten ist die Anlagerung an den Chrom-1 : 1-Komplex beendet. Die Lösung wird durch Sprühtrocknung in ein dunkelgrünes Pulvers umgewandelt, welches auf Wolle und Polyamid brillante grüne Färbungen mit guten Licht- und Naßechtheiten liefert.

Auf dem gleichen Weg lassen sich die in den folgenden Beispielen angegebenen Chrommischkomplexe herstellen, die in getrocknetem Zustand dunkelgrüne bis schwarze Pulver darstellen.

Beispiel 3

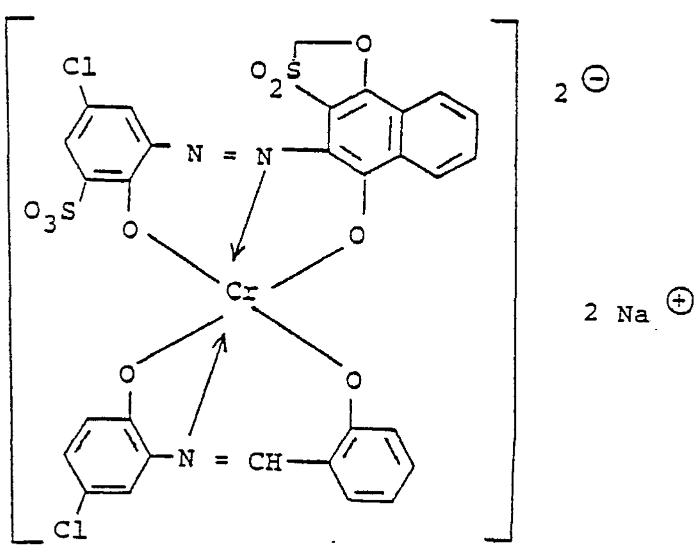

färbt Wolle, Polyamid und Leder in echten, grünen Nuancen. Farbton ist blauer als bei Beispiel 2.

Beispiel 4

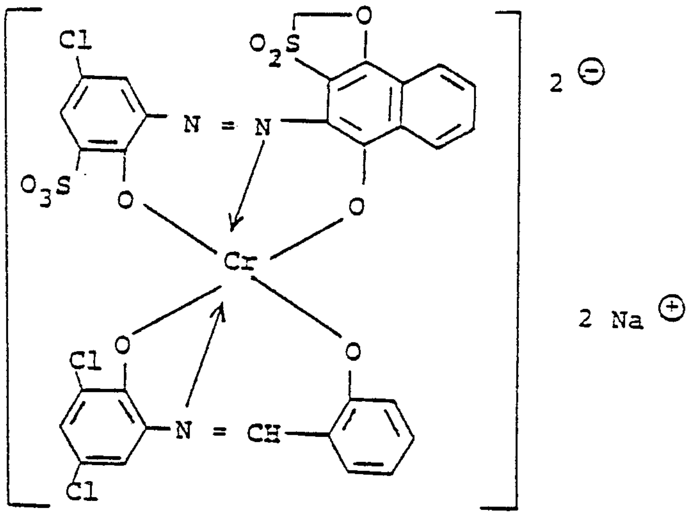

grüne Färbungen auf Wolle, Polyamid und Leder mit guten Echtheiten. Blauere Farbtöne als bei Beispiel 2.

Beispiel 5

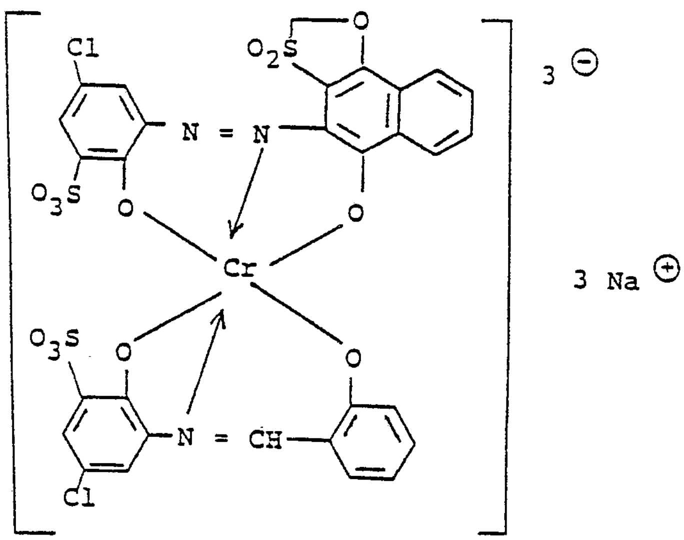

brillante grüne Färbungen auf Wolle, Polyamid und Leder.

Beispiel 6

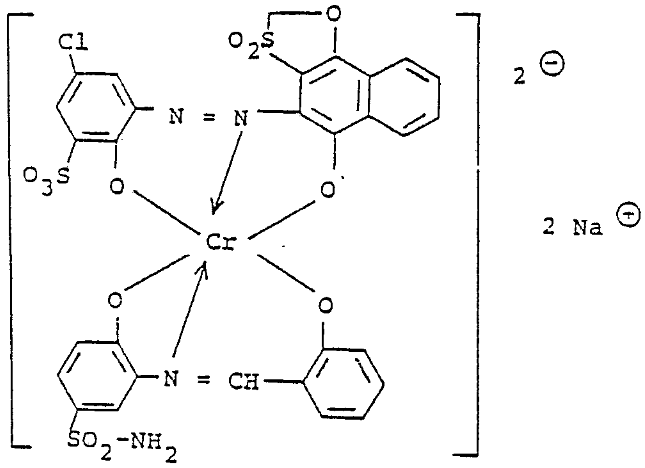

gibt grüne Färbungen auf Wolle und Polyamid, etwas blauer als bei Beispiel 2.

Beispiel 7

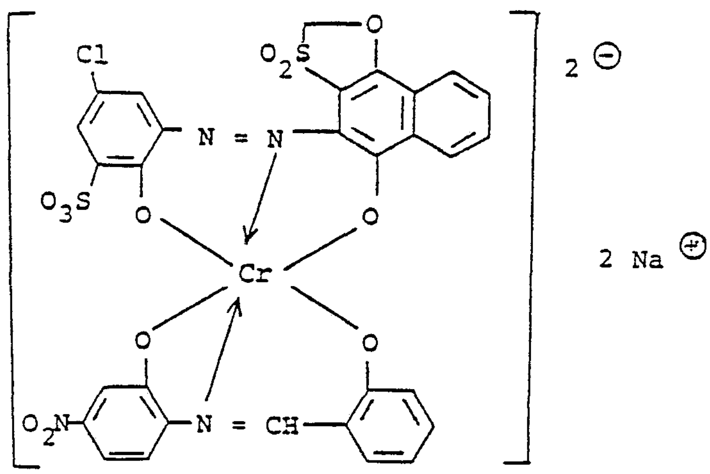

grüne Färbungen auf Wolle, Polyamid und Leder, etwas gelber als bei Beispiel 2.

Beispiel 8

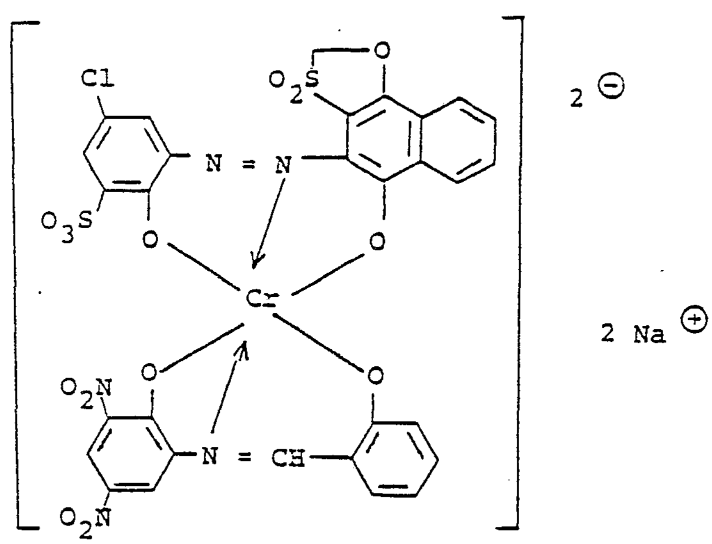

olivgrüne Färbungen in guten Echtheiten auf Wolle, Polyamid und Leder.

Beispiel 9

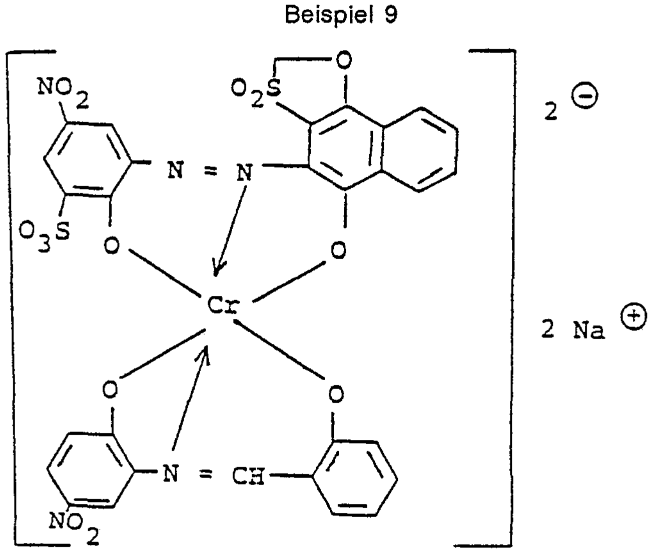

olivgrüne Färbungen auf Wolle, Polyamid und Leder.

Beispiel 10

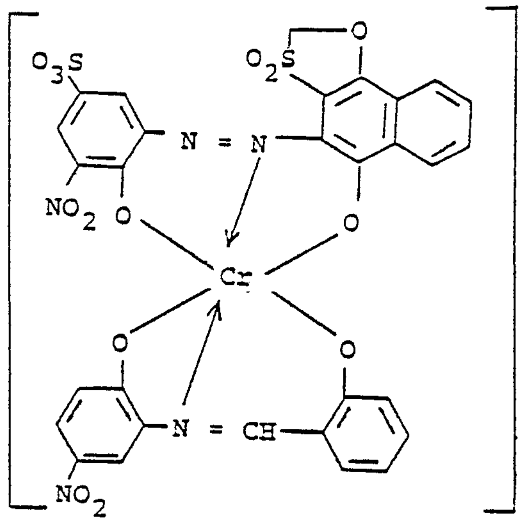

grüne Färbungen auf Wolle, Polyamid und Leder in guten Licht- und Naßechtheiten.

Beispiel 11

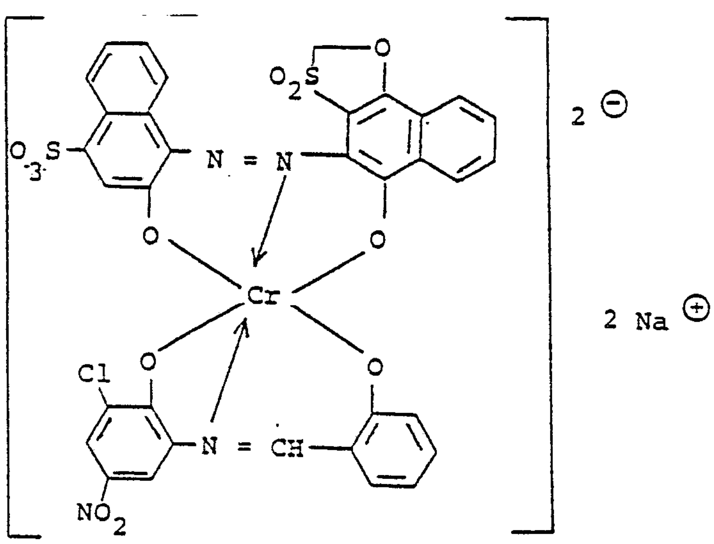

brillantgrüne Färbungen auf Wolle, Polyamid und Leder.

Beispiel 12

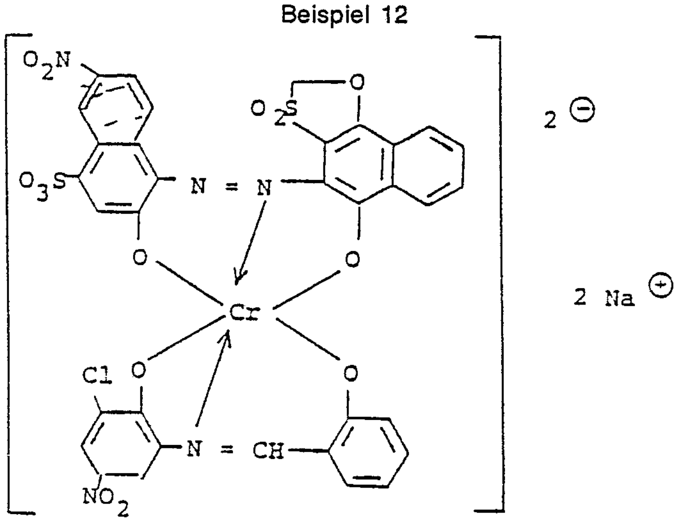

schwarzgrüne Färbungen in guten Licht- und Naßechtheiten auf Wolle, Polyamid und Leder.

Beispiel 13

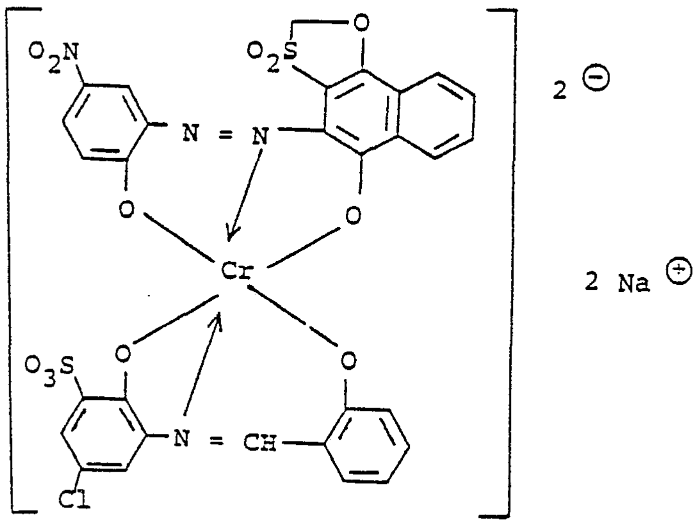

40,1 g des Monoazofarbstoffes aus diazotiertem 4-Nitro-2-amino-1-hydroxybenzol und 4'-Hydroxynaphtho-(2',1' : 4,5)-oxathiazol-S-dioxid werden in 500 ml Wasser in Gegenwart von 20 ml 40 %iger Natronlauge auf 80 °C erwärmt. In die Lösung trägt man portionsweise den aus 22,4 g 4-Chlor-2-amino-1-hydroxybenzol-6-sulfonsäure, 12,2 g Salicylaldehyd und 26,65 g $CrCl_3 \cdot 6H_2O$ gewonnenen Chrom-1 : 1-Komplex ein. Durch gleichzeitiges Zutropfen von ca. 40 ml 40 %iger Natronlauge hält man den pH auf 7-8. Eine halbe Stunde später ist die Anlagerung des Monoazofarbstoffes an den Chrom-1 : 1-Komplex beendet. Durch Eintrocknen auf einer Walze erhält man ein dunkelgrünes Pulver, welches Wolle und Polyamid in olivstichig grünen echten Tönen färbt.

Auf die gleiche Weise lassen sich die in den folgenden drei Beispielen angegebenen Chrommischkomplexe herstellen.

Beispiel 14

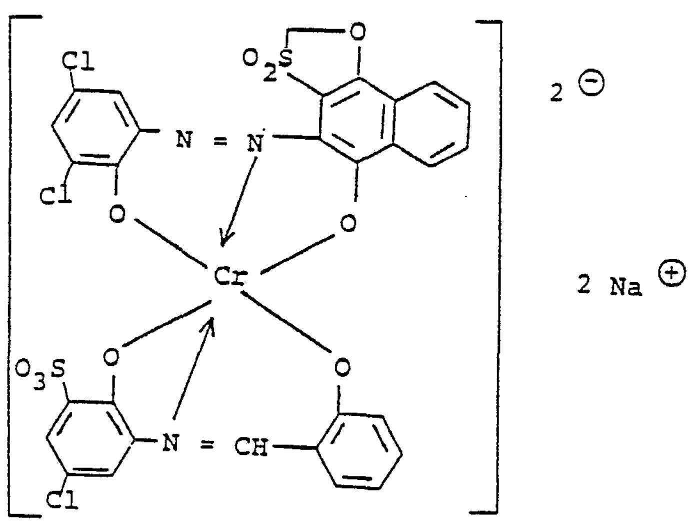

dunkelgrünes Pulver, welches klare grüne Färbungen auf Wolle, Polyamid und Leder ergibt.

(Siehe Formel Seite 12 f.)

Beispiel 15

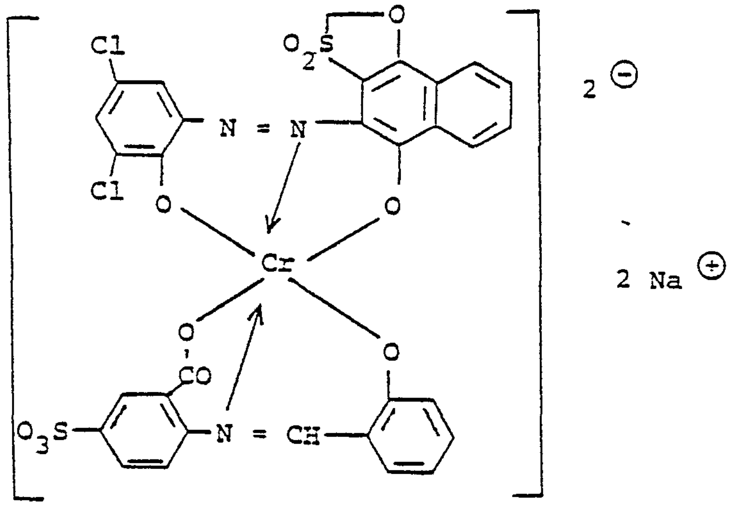

klare, grüne Färbungen auf Wolle und Polyamid.

Beispiel 16

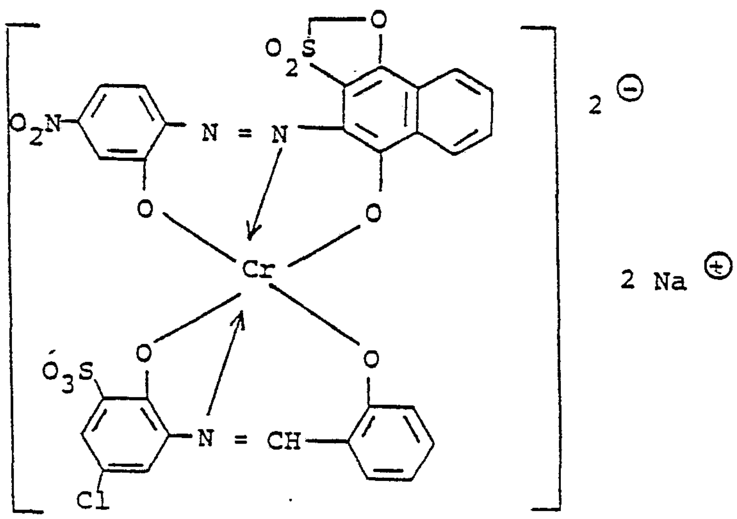

blaustichig grüne Färbungen auf Wolle, Polyamid und Leder in guten Licht- und Naßechtheiten.

Beispiel 17

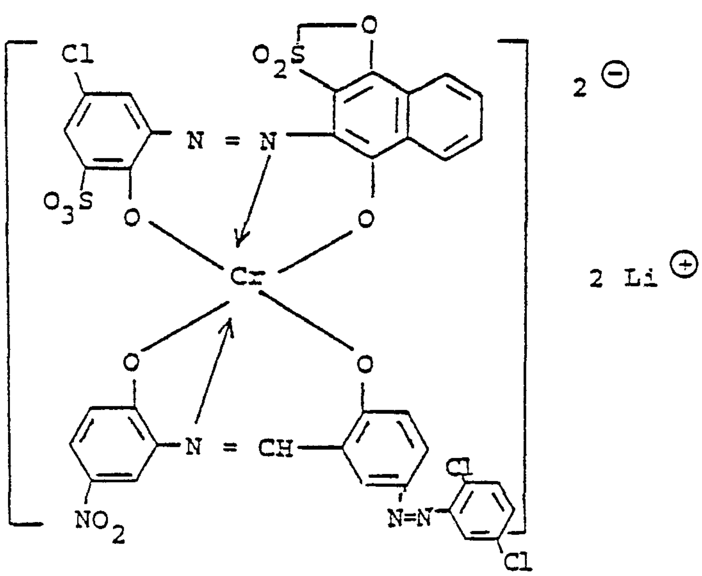

Der aus 22,35 g diazotierter 4-Chlor-2-amino-1-hydroxybenzol-6-sulfonsäure, 23,6 g 4'-Hydroxynaphtho-(2',1' : 4,5)-oxathiazol-S-dioxid und 26,65 g $CrCl_3 \cdot 6H_2O$ gewonnene Chrom-1 : 1-Komplex wird als feuchte Paste in 400 ml Ethylenglykolmonoethylether verrührt. Man setzt 15,4 G 4-Nitro-2-amino-1-hydroxybenzol und die feuchte Paste von 29,5 g Kupplungsprodukt aus diazotiertem 2,5-Dichloranilin und Salicylaldehyd zu. Das Gemisch wird auf 80 °C erwärmt und dabei durch gelegentliche Zugabe von insgesamt ca. 21 g festem $LiOH \cdot H_2O$ bei pH 7-8 gehalten. Nach einer halben Stunde ist der unsymmetrische Chrom-1 : 2-Komplex fertig. Man läßt auf Raumtemperatur abkühlen, trennt geringe Salzrückstände durch Filtration ab und erhält eine lagerstabile, konzentrierte tiefgrüne Lösung. Diese ergibt auf der MULTIMA Färbemaschine klare gelbstichig grüne Lederfärbungen mit guter Farbstoffbindung, guter Wassertropfenechtheit und guter Lichtechtheit.

Durch Ersatz von 2,5-Dichloranilin gegen andere Anilin-Derivate oder Anilin oder durch Ersatz von 4-Chlor-2-amino-1-hydroxybenzol-6-sulfonsäure oder 4-Nitro-2-amino-1-hydroxybenzol gegen andere Amine erhält man die unter den Beispielen 18, 19 und 20 aufgeführten Chrommischkomplexe. Sie sind als Natriumsalze dargestellt, wie sie im allgemeinen in festen Präparationen vorliegen. Sie können aber auch bevorzugt in Form ihrer Lithiumsalze als Lösungen aufbewahrt und zum Färben eingesetzt werden. Auf Wolle, Polyamid und Leder ergeben sie gelbstichig grüne bis olivgrüne Färbungen mit guten Gebrauchsechtheiten.

Beispiel 18

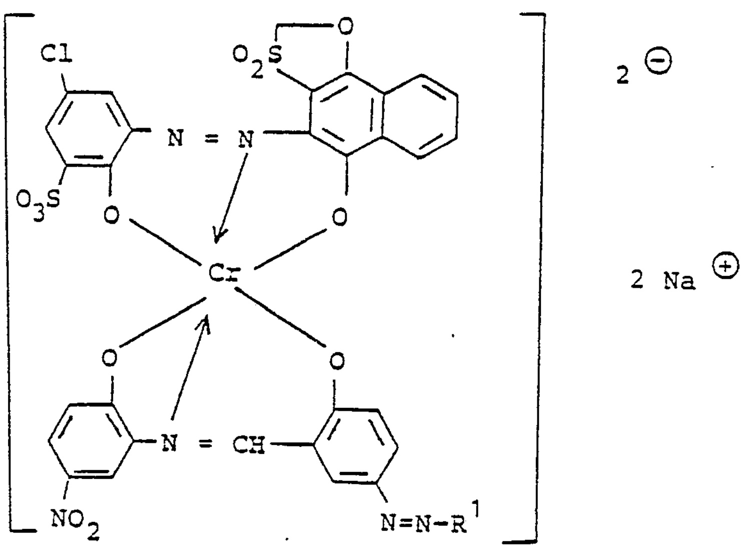

$-R^1 =$

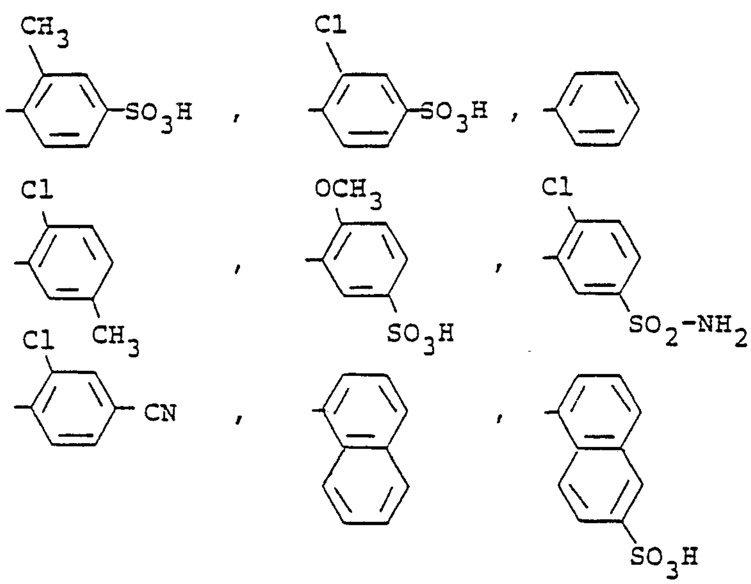

Beispiel 19

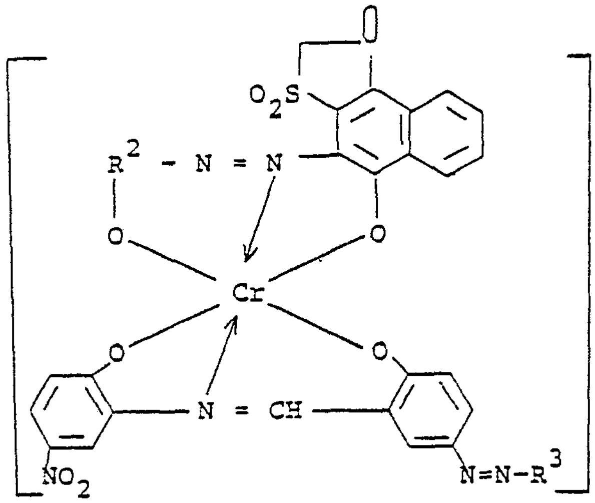

—R²—O = 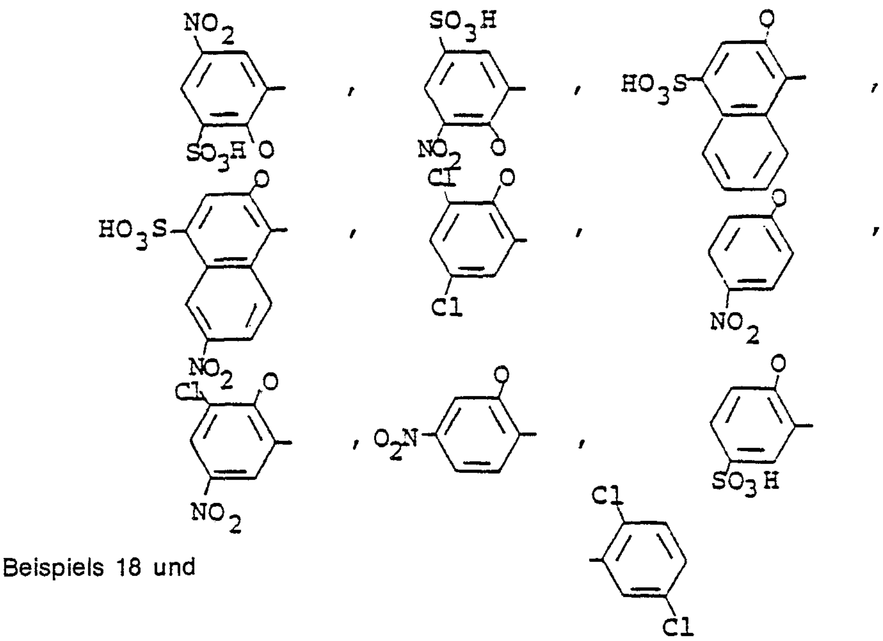

, , ,

, , ,

, ,

—R³ = —R¹ des Beispiels 18 und

Beispiel 20

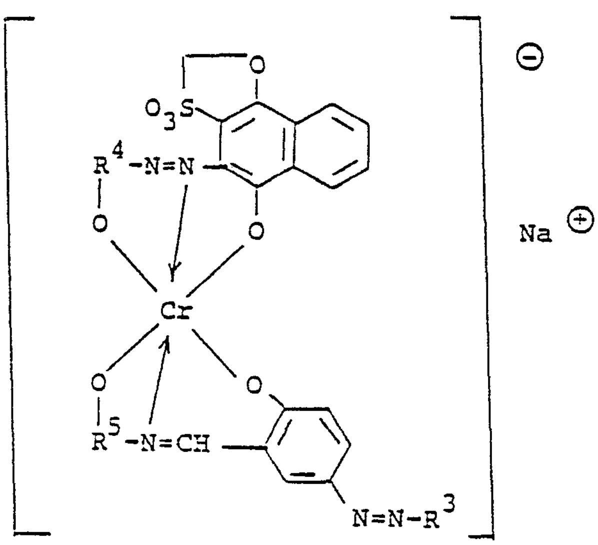

—$R^3$ = —$R^3$ des Beispiels 19

—$R^4$—O = —$R^2$—O des Beispiels 19 + 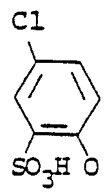

—$R^5$—O =

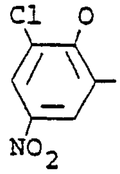, 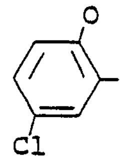, 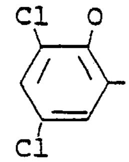

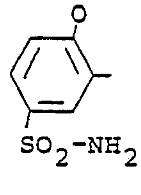, 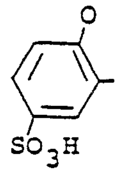, 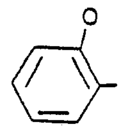

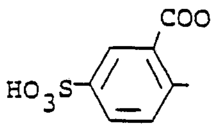, 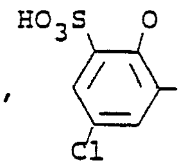, 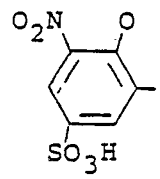

**Patentansprüche**

1. Chromkomplexfarbstoffe, die in Form der freien Säure der Formel

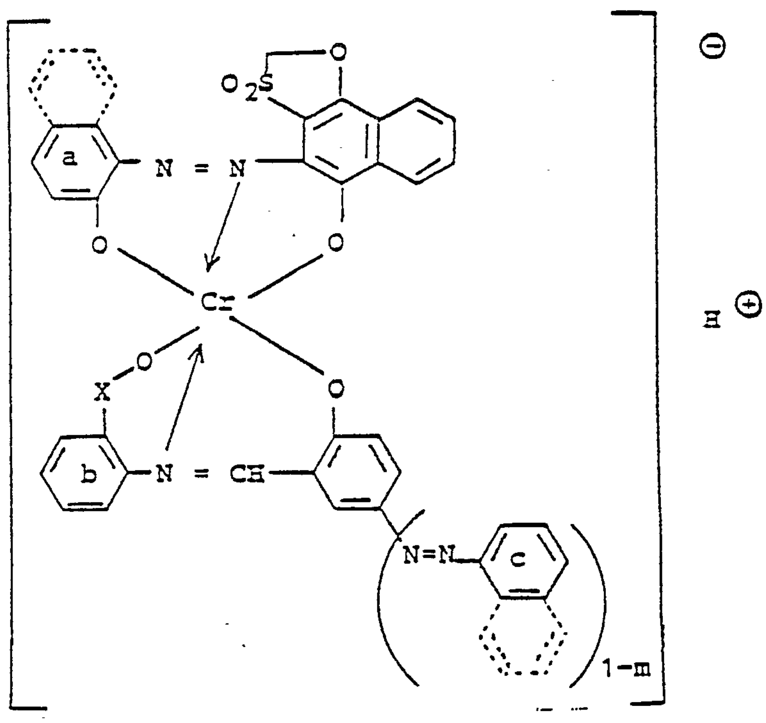

entsprechen, worin

X für CO oder eine direkte Bindung und

m für 0 oder 1 stehen, und

die Ringe a, b und c bzw. die gegebenenfalls ankondensierten Benzolkerne weitere in der Chemie der Metallkomplexfarbstoffe übliche Substituenten tragen können.

2. Farbstoffe gemäß Anspruch 1 der Formel

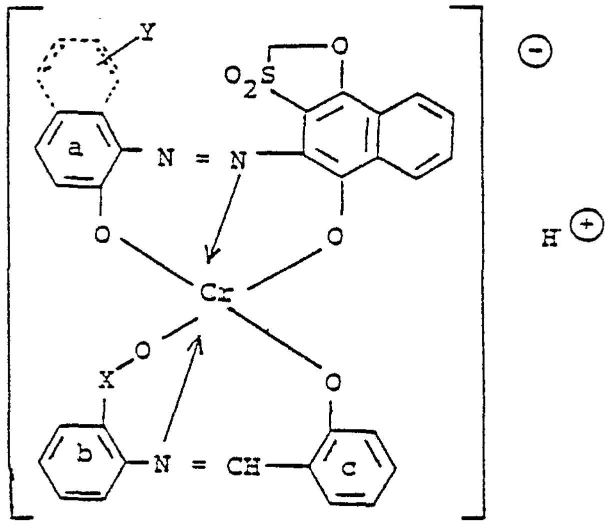

worin

Ring a durch $SO_3H$, Sulfamoyl, Cl oder $NO_2$,
Ring b durch $SO_3H$, Sulfamoyl, Cl, $NO_2$ oder $CH_3$ und
Ring c durch $SO_3H$, Sulfamoyl, Cl, $CH_3$ oder $OCH_3$ substituiert sein können und
X die obengenannte Bedeutung hat, und
Y für H oder $NO_2$ steht.

3. Farbstoffe gemäß Anspruch 1 der Formel

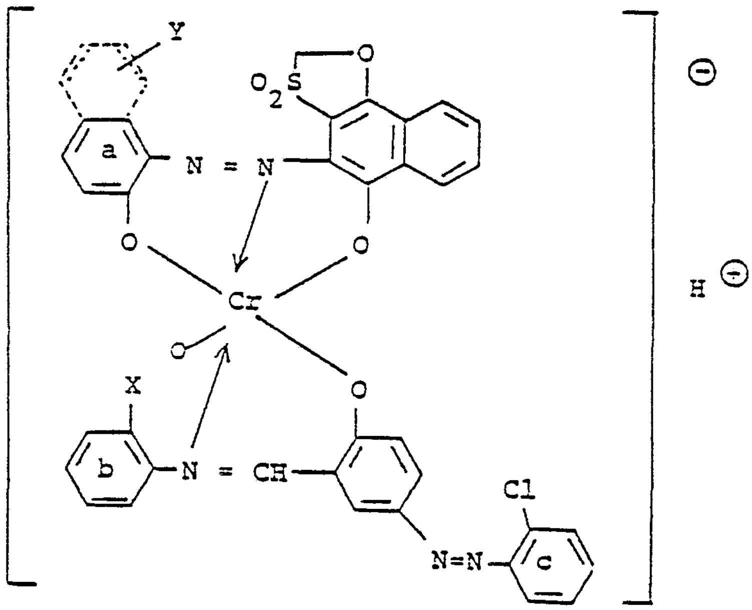

worin

Ring a durch $SO_3H$, Sulfamoyl, Cl oder $NO_2$,
Ring b durch $SO_3H$, Sulfamoyl, Cl, $NO_2$ oder $CH_3$ und
Ring c durch $SO_3H$, Sulfamoyl, Cl, $CH_3$ oder $OCH_3$ substituiert sein können und
X die obengenannte Bedeutung hat, und
Y für H oder $NO_2$ steht.

4. Farbstoffe der Ansprüche 1 bis 3 die eine einzige Sulfogruppe enthalten.

5. Farbstoff gemäß Anspruch 1 der Formel

(Siehe Formel Seite 17 f.)

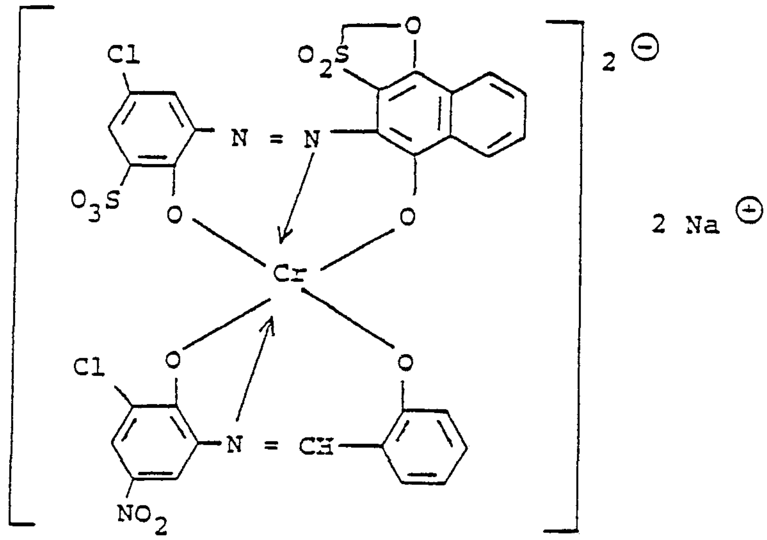

6. Farbstoff gemäß Anspruch 1 der Formel

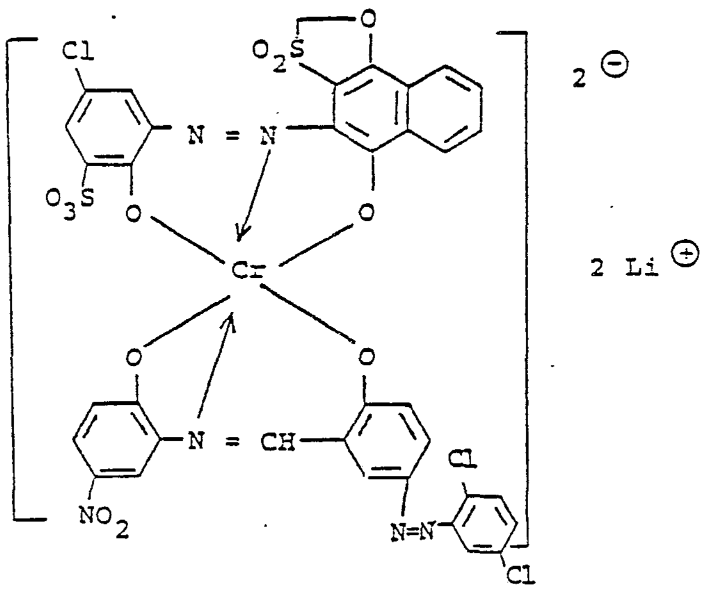

7. Verfahren zur Herstellung von Farbstoffen gemäß Anspruch 1, dadurch gekennzeichnet, daß man einen Farbstoff der Formel

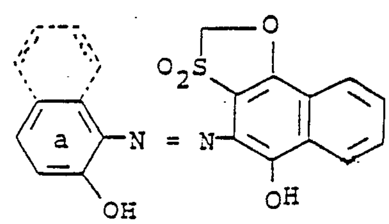

(IV)

oder

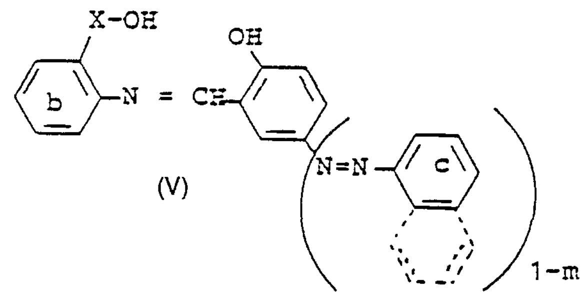

(V)

mit einem chromabgebenden Mittel in den 1 : 1-Chromkomplex überführt und diesen mit dem entsprechenden nichtmetallisierten Farbstoff der Formel (V) bzw. (IV) umsetzt.

8. Verfahren zum Färben von amidgruppenhaltigen Materialien, insbesondere Leder, dadurch gekennzeichnet, daß man Farbstoffe gemäß Ansprüche 1-5 verwendet.

**Claims**

1. Chromium complex dyestuffs hich, in the form of the free acid, correspond to the formula

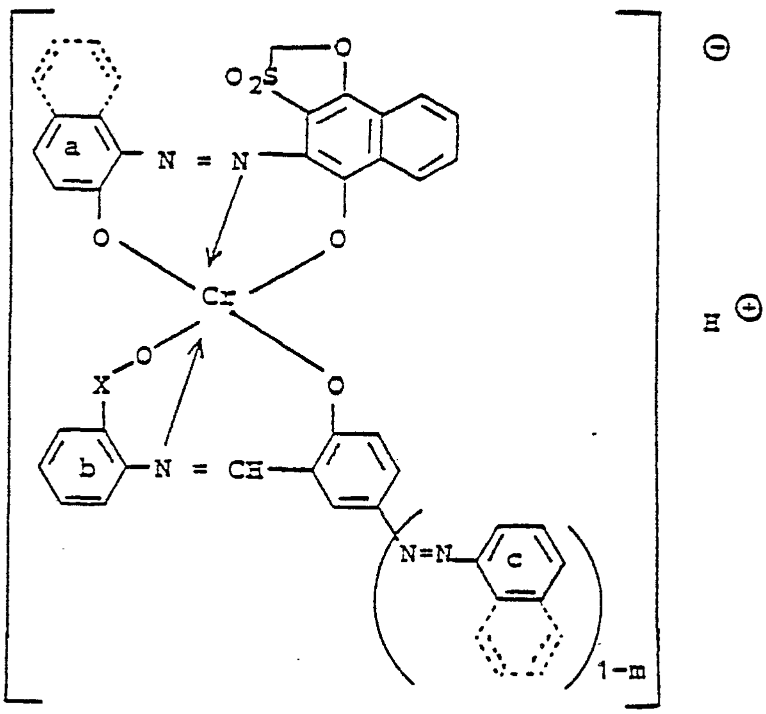

wherein

X represents CO or a direct bond and

m represents 0 or 1 and

the rings a, b and c and, if present, fused-on benzene rings can carry further substituents customary in the chemistry of metal complex dyestuffs.

2. Dyestuffs according to Claim 1 of the formula

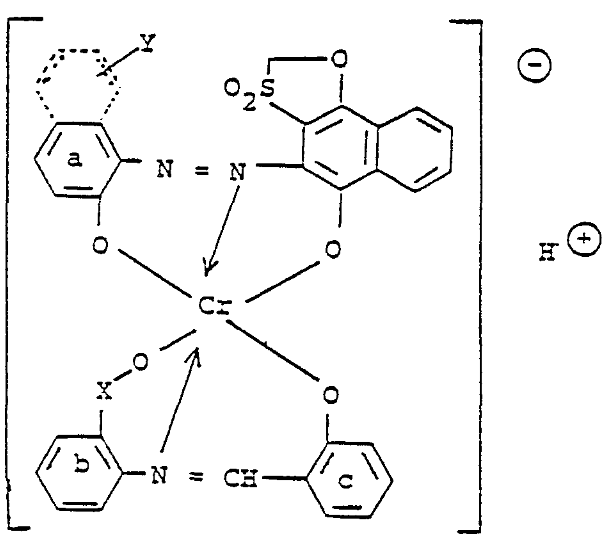

wherein

ring a can be substituted by $SO_3H$, sulphamoyl, Cl or $NO_2$,

ring b can be substituted by $SO_3H$, sulphamoyl, Cl, $NO_2$ or $CH_3$ and

ring c can be substituted by $SO_3H$, sulphamoyl, Cl, $CH_3$ or $OCH_3$ and
X has the abovementioned meaning and
Y represents H or $NO_2$.

3. Dyestuffs according to Claim 1 of the formula

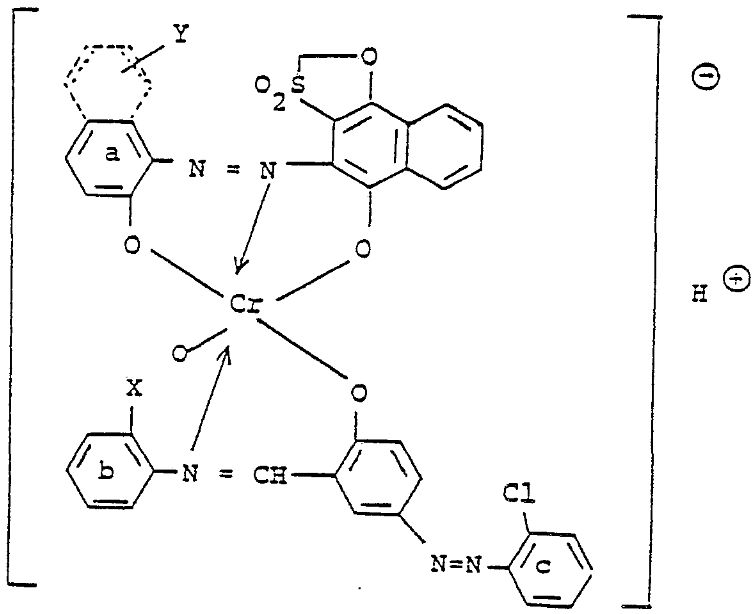

wherein
ring a can be substituted by $SO_3H$, sulphamoyl, Cl, or $NO_2$,
ring b can be substituted by $SO_3H$, sulphamoyl, Cl, $NO_2$ or $CH_3$ and
ring c can be substituted by $SO_3H$, sulphamoyl, Cl, $CH_3$ or $OCH_3$ and
X and the abovementioned meaning and
Y represents H or $NO_2$.

4. Dyestuffs of Claims 1 to 3, which contain a single sulpho group.

5. Dyestuff according to Claim 1 of the formula

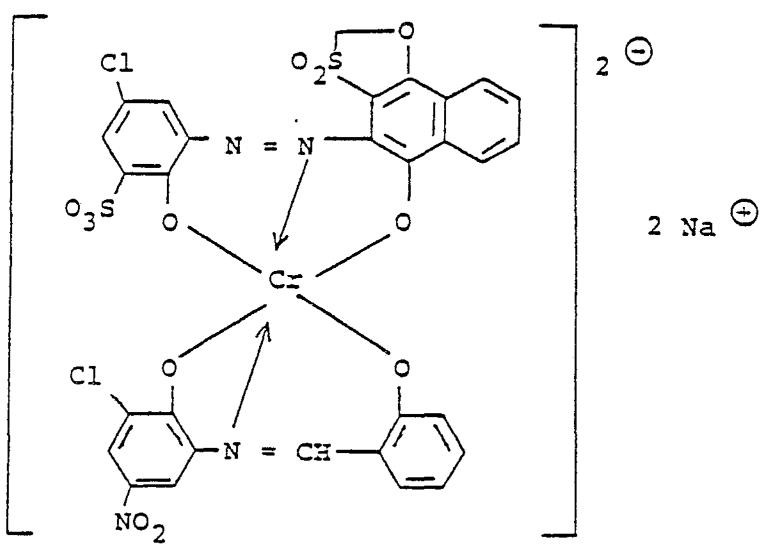

6. Dyestuff according to Claim 1 of the formula

(See formula page 20)

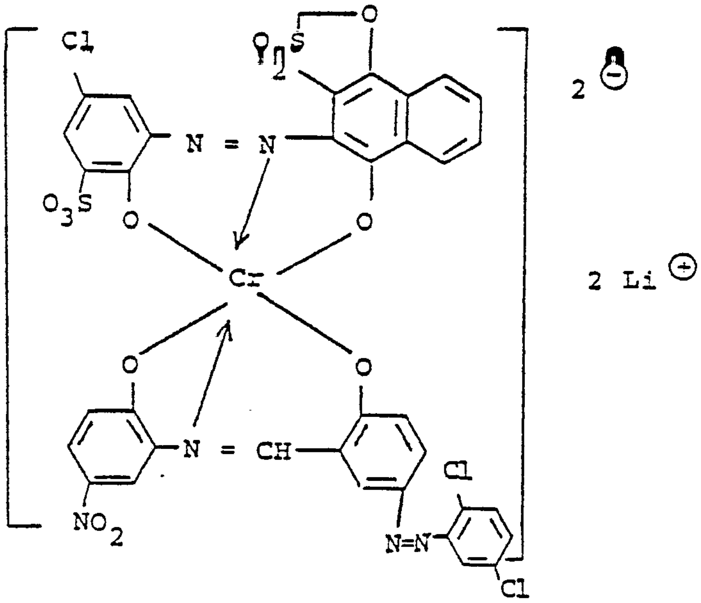

7. Process for preparing dyestuffs according to Claim 1, characterised in that a dyestuff of the formula

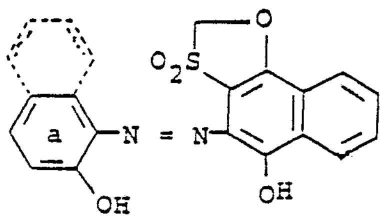

IV

or

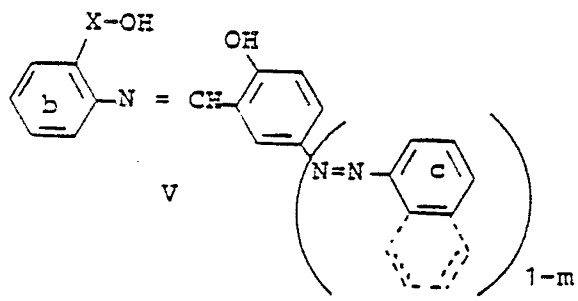

V

is converted with a chromium-donating agent into the 1 : 1 chromium complex and the latter is reacted with the corresponding non-metallised dyestuff of the formula (V) or (IV) respectively.

8. Process for dyeing materials containing amide groups, in particular leather, characterised in that dyestuffs according to Claims 1-5 are used.

**Revendications**

1. Colorants complexes de chrome répondant, à l'état d'acides libres, à la formule

(Voir Formule page 21)

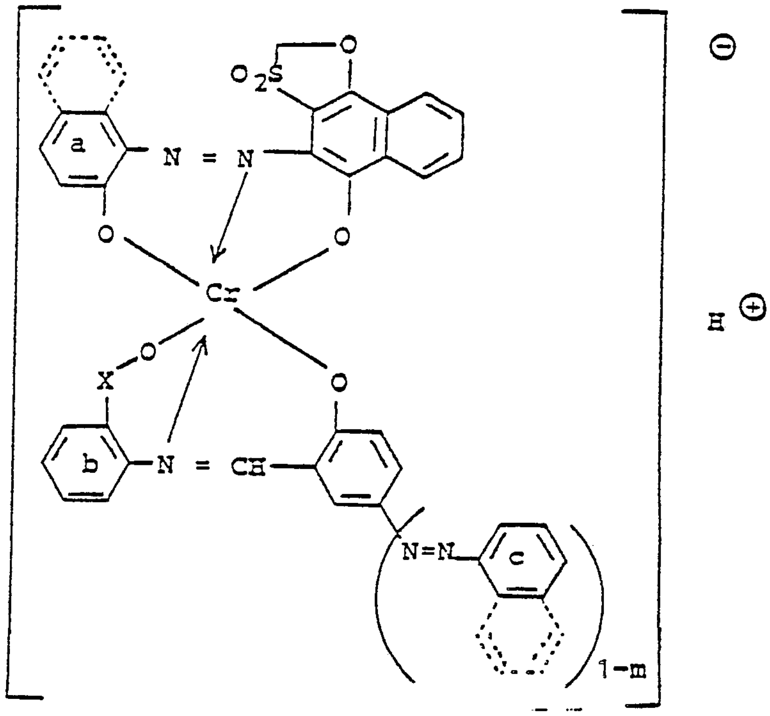

dans laquelle

X représente CO ou une liaison directe et

m est égal à 0 ou 1, et

les cycles a, b et c et les noyaux benzéniques éventuellement condensés peuvent porter d'autres substituants usuels dans la chimie des colorants complexes métalliques.

2. Colorants selon la revendication 1, de formule

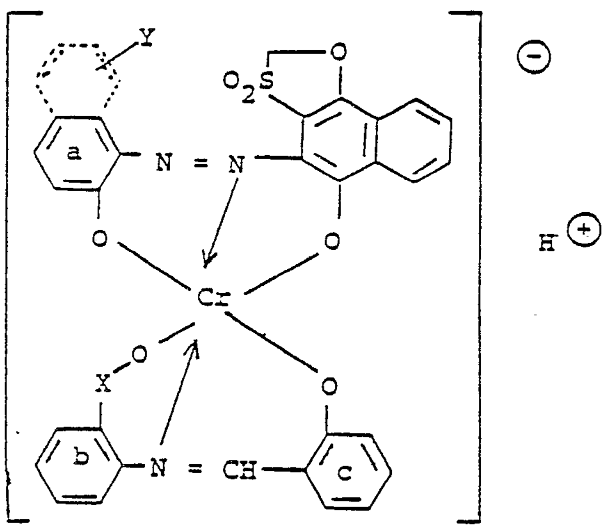

dans laquelle

le cycle a peut être substitué par des groupes $SO_3H$, sulfamoyle, Cl ou $NO_2$,

le cycle b peut être substitué par des groupes $SO_3H$, sulfamoyle, Cl, $NO_2$ ou $CH_3$ et

le cycle c peut être substitué par des groupes $SO_3H$, sulfamoyle, Cl, $CH_3$ ou $OCH_3$ et

X a la signification indiquée ci-dessus et

Y représente H ou $NO_2$.

3. Colorants selon la revendication 1, de formule

(Voir Formule page 22)

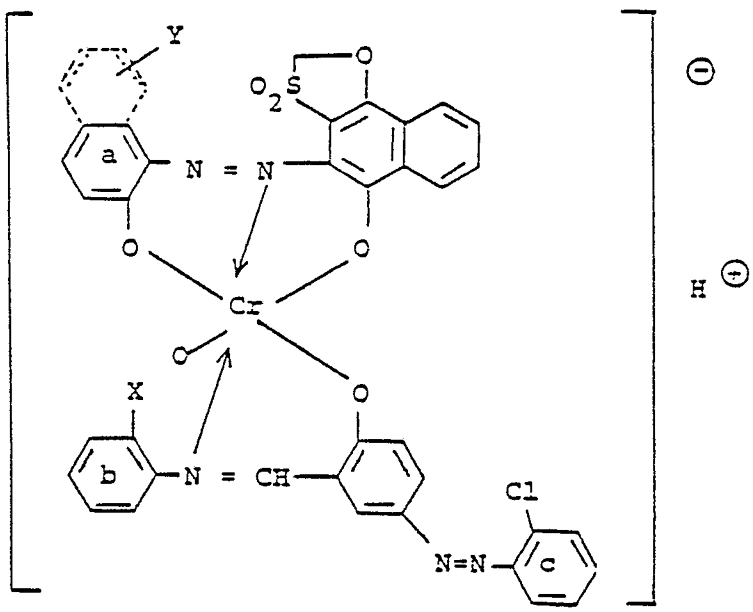

dans laquelle le cycle a peut être substitué par des groupes $SO_3H$, sulfamoyle, Cl ou $NO_2$, le cycle b peut être substitué par des groupes $SO_3H$, sulfamoyle, Cl, $NO_2$ ou $CH_3$ et le cycle c peut être substitué par des groupes $SO_3H$, sulfamoyle, Cl, $CH_3$ ou $OCH_3$ et X a la signification indiquée ci-dessus, et Y représente H ou $NO_2$.

4. Colorants des revendications 1 à 3, contenant un seul groupe sulfo.

5. Colorant selon la revendication 1, de formule

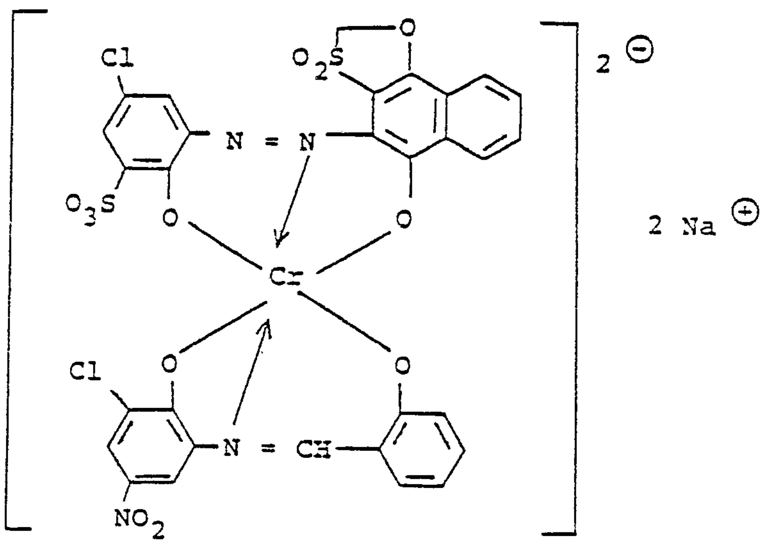

6. Colorant selon la revendication 1, de formule

(Voir Formule page 23)

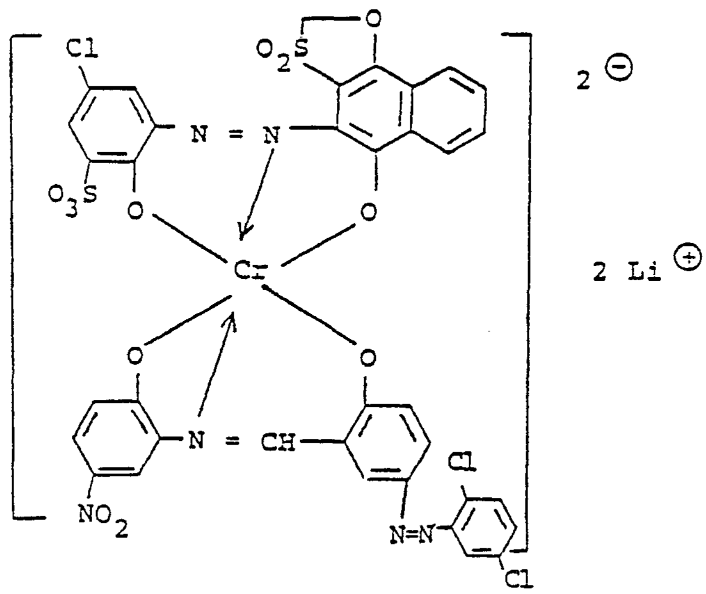

7. Procédé de préparation des colorants selon la revendication 1, caractérisé en ce que l'on convertit un colorant de formule

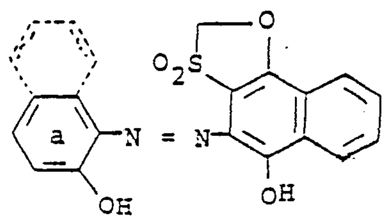

(IV)

ou

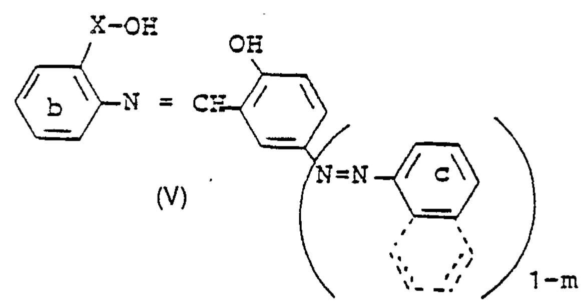

(V)

à l'aide d'un agent fournissant du chrome, en le complexe de chrome 1 : 1 qu'on fait réagir avec le colorant correspondant non métallisé de formule respective V ou IV.

8. Procédé pour la teinture de matières contenant des groupes amide, en particulier du cuir, caractérisé en ce que l'on utilise des colorants selon les revendications 1 à 5.